# EUROPEAN PATENT APPLICATION

(11) **EP 4 559 561 A1**
(43) Date of publication of application: **28.05.2025**
(21) Application number: 24165203.1
(22) Date of filing: 21.03.2024
(51) Int. Cl.: B01D 53/14

(54) **PROCESS FOR REMOVING CARBON DIOXIDE FROM FLUE GAS**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: KEUCHEL, Florian, 60439 Frankfurt (DE); MEYER, Quentin, 60388 Frankfurt (DE); CHAUBET, Lucie, 60388 Frankfurt (DE); SCHMID MCGUINNESS, Teja, 60439 Frankfurt (DE); RAULLI, Elena, 60439 Frankfurt (DE)
(74) Representative: Air Liquide

(57) **Abstract**

The invention relates to a process for separating carbon dioxide from a flue gas stream by gas scrubbing with a liquid scrubbing agent containing at least one absorbent compound which is selective for carbon dioxide absorption. According to the invention, a carbon dioxide enriched scrubbing agent stream discharged from an absorption column is introduced into a partial regeneration column, and is contacted by means of a gaseous nonpolar stripping agent in countercurrent flow, to generate a partially regenerated scrubbing agent stream which is returned to the absorption column.

## Description

The invention relates to a process for separating carbon dioxide from a flue gas stream.

The reduction of carbon dioxide (CO₂) emissions in various chemical and industrial processes is crucial to mitigate the risks and effects of climate change. It follows that high carbon capture rates are targeted on these processes, typically in excess of 90%.

In chemical and industrial processes that involve a combustion step, while a certain carbon capture rate can sometimes be achieved on a process gas in favourable conditions (high CO₂ concentration or partial pressure, high pressure, limited impurities), a certain portion of the CO₂ emissions are always emitted at lower concentrations and pressures in the flue gas that results from the combustion reaction. CO₂ capture on the flue gas is consequently often required in order to reach a high capture rate of 90 % or more, whether on its own or in combination with carbon capture on a process or pre-combustion gas.

The reference process for capturing CO₂ at low concentrations (< 25 %) from low pressure gasses is a chemical absorption technology, typically an amine wash unit with a solvent (scrubbing agent) adapted for the conditions and impurities of the flue gas.

While a capture rate of up to 95 % can typically be achieved with a chemical wash technology on such a flue gas, the unfavourable conditions lead to a higher energy consumption for the carbon capture unit, which in turn results in higher indirect emissions. To compound the situation further, in many cases there is insufficient heat available in the wider process.

The desorption or regeneration step in an amine wash unit is more critical in regards to energy consumption, however. In a typical amine wash process, heat must be supplied to desorb CO₂ to a sufficient extent, in order to maximize the cyclic loading capacity of the solvent and therefore maximize the efficiency of the process and minimize the cost of the overall process.

High temperatures, e.g. 120 to 130 °C, are usually required for the desorption of CO₂ from an amine type absorbent, with a maximum threshold imposed by thermal degradation of the amine solvent. At these temperatures, and at the pressure conditions typical for amine regeneration columns, the water in the aqueous amine solution starts to evaporate. This water vapour generated in the regeneration column acts as a stripping medium and further enhances the desorption of CO₂.

The necessity of reaching these high temperatures nevertheless requires the use of high grade heat sources such as low pressure or medium pressure steam, which are often not available in sufficient quantities in industrial facilities. Furthermore, the evaporation of the water in the aqueous solvent mixture accounts for the major part of the energy consumption in the process.

Thus, CO₂ desorption at temperatures beneath 100 °C would be preferable. The amount of CO₂ that can be desorbed beneath 100 °C is constrained, however, by thermodynamic limitations, and possible kinetic limitations.

EP 4 282 511 A1 discloses a scheme in which part of the CO₂ laden amine absorbent is partially regenerated below 100 °C to generate a semi-lean amine, and a major part of this semi-lean amine is returned to the absorption column. The residual part of the semi-lean amine is routed to a hot regeneration column to form a lean solvent, with a CO₂ loading that is low enough for the targeted capture rate. This lean solvent is also returned to the absorber. By implementing this scheme, high grade heat required in the system can be reduced by half.

Several methods are proposed for the partial regeneration step, which focus on facilitating the breakdown of the carbamate ions formed by reaction of the amine and CO₂. Those methods include the usage of Lewis or Bronsted acid catalyst components and bubble formation promoters.

Those methods do not address the limitations of mass transfer across the gas-liquid interface. Furthermore, the use of catalysts with acidic centers or bubble formation promoters introduces substances into the process that can lead to undesirable contamination or corrosion. This applies in particular to Lewis catalysts, which comprise or consist of a metal oxide, in particular a heavy metal oxide.

Accordingly, there is a need for improved processes for removing carbon dioxide from flue gas, and regenerating the used solvent or scrubbing agent with a low energy consumption.

It is one object of the present invention to propose a process which improves the mass transfer of CO₂ from the liquid phase to the gas phase in the low temperature regeneration step in which the semi-lean solvent is generated.

It is one further object of the present invention to propose a process which does not require an additive which comprises metal ions, in particular heavy metal ions, for the low temperature regeneration of the CO₂ laden amine solvent.

A contribution to the at least partial solution of at least one of the above mentioned objects is provided by the subject-matter of the independent claims. The dependent claims provide preferred embodiments which contribute to the at least partial solution of at least one of the objects. Preferred embodiments of elements of a category according to the invention shall, if applicable, also be preferred for components of same or corresponding elements of a respective other category according to the invention.

The terms "having", "comprising" or "containing" etc. do not exclude the possibility that further elements, ingredients etc. may be comprised. The indefinite article "a" or "an" does not exclude that a plurality may be present.

In general, at least one of the underlying problems is at least partially solved by a process for separating carbon dioxide from a flue gas stream by gas scrubbing with a liquid scrubbing agent containing at least one absorbent compound which is selective for carbon dioxide absorption, wherein the process comprises the following process steps:
a) Providing the flue gas stream and introducing the flue gas stream into an absorption column;
b) Contacting the flue gas stream in the absorption column with a first scrubbing agent stream and a second scrubbing agent stream in countercurrent flow, whereby a carbon dioxide enriched scrubbing agent stream is formed, and wherein a carbon dioxide depleted flue gas stream is formed, which is discharged from the absorption column;
c) Introducing the carbon dioxide enriched scrubbing agent stream into a partial regeneration column, and contacting the carbon dioxide enriched scrubbing agent stream in the partial regeneration column by means of a gaseous nonpolar stripping agent in countercurrent flow, to generate a partially regenerated scrubbing agent stream and a first carbon dioxide containing regeneration stream;
d) Dividing the partially regenerated scrubbing agent stream into a first substream and into a second substream, wherein the first substream forms the first scrubbing agent stream;
e) Introducing the first scrubbing agent stream into the absorption column for contacting the flue gas stream according to step b);
f) Introducing the second substream into a hot regeneration column, wherein the second substream is further regenerated to generate a regenerated scrubbing agent stream, which forms the second scrubbing agent stream, and to generate a second carbon dioxide containing regeneration stream;
g) Introducing the second scrubbing agent stream into the absorption column for contacting the flue gas stream according to step b).

According to the invention, a carbon dioxide enriched scrubbing agent stream discharged from an absorption column is introduced into a partial regeneration column, and the carbon dioxide enriched scrubbing agent stream is contacted in the partial regeneration column by means of a gaseous nonpolar stripping agent in countercurrent flow, to generate a partially regenerated scrubbing agent stream and a first carbon dioxide containing regeneration stream. By using a gaseous nonpolar stripping agent in the partial regeneration column, mass transfer across the gas-liquid-interface of carbon dioxide to be desorbed from the absorbent, and thus to be released into the gaseous phase, is facilitated. The use of an acid catalyst or bubble formation promoter can thus be avoided.

After capturing carbon dioxide from the flue gas stream, the carbon dioxide enriched scrubbing agent stream is sent to a partial regeneration step in a partial regeneration column, in which the carbon dioxide enriched scrubbing agent is not fully regenerated. Thus, a semi-lean scrubbing agent stream or partially regenerated scrubbing agent stream is obtained. Said stream of partially regenerated scrubbing agent is divided into two substreams. The first substream is returned to the absorption column, thus forming a semi-lean absorption loop with the partial regeneration column. The second substream is further regenerated in a hot regeneration column to generate a regenerated scrubbing agent stream. The scrubbing agent may but does not have to be fully regenerated in the hot regeneration column. It will be understood by those skilled in the art that the desorption of carbon dioxide from the scrubbing agent may often not be complete in the sense of a 100 % regeneration under given operational conditions. The regenerated scrubbing agent stream is also returned to the absorption column.

The partial regeneration in the partial regeneration column is achieved by means of a gaseous nonpolar stripping agent. Said nonpolar stripping agent is preferably selected such that it does not react with the scrubbing agent, in particular does not react with the absorbent compound of the scrubbing agent. Furthermore, the nonpolar scrubbing agent preferably exhibits low miscibility with the scrubbing agent, in particular exhibits low miscibility with the absorbent compound of the scrubbing agent. According to one embodiment, the gaseous nonpolar stripping agent condenses in a mixture with carbon dioxide in a range of temperatures from 20 °C to 95 °C.

A carbon dioxide rich stream, referred to as the first carbon dioxide containing regeneration stream, is discharged from the partial regeneration column, in particular from the top of the partial regeneration column. Said regeneration stream may contain water vapour and the absorbent compound.

According to one further aspect of the invention, the nonpolar stripping agent has an electric dipole moment which is at least 0.5 Debye less than the electric dipole moment of the absorbent compound of the scrubbing agent.

That is, the nonpolar stripping agent exhibits a lower polarity than the absorbent compound of the scrubbing agent. The larger the difference in polarity is between the nonpolar stripping agent and the absorbent compound of the scrubbing agent, the lower the miscibility of the nonpolar scrubbing agent and the absorbent compound.

According to one further aspect of the invention, the nonpolar stripping agent has an electric dipole moment which is at least 0.5 Debye less than the electric dipole moment of the scrubbing agent. The scrubbing agent comprises the absorbent compound and may comprise at least one further compound, in particular water. The scrubbing agent may comprise more than one absorbent compound. According to one example, the scrubbing agent comprises the absorbent compound and water, which means the scrubbing agent is an aqueous solution of the absorbent compound and water. The larger the difference in polarity is between the nonpolar stripping agent and the scrubbing agent, the lower the miscibility of the nonpolar scrubbing agent and the scrubbing agent.

According to one further aspect of the invention, the electric dipole moment of the nonpolar stripping agent is 0.50 Debye or less, preferably is 0.25 Debye or less, more preferred is 0.10 Debye or less.

According to one further example, the electric dipole moment of the nonpolar stripping agent is 0 (zero), which means the nonpolar scrubbing agent exhibits no polarity at all. Example for such scrubbing agents are He (Helium), molecular Nitrogen and molecular Hydrogen.

According to one further aspect of the invention, the nonpolar stripping agent comprises a condensable compound or comprises a mixture of compounds comprising at least one condensable compound. In particular, the nonpolar stripping agent comprises a condensable compound which is condensable at or below 100 °C, or comprises a mixture of compounds comprising at least one condensable compound which is condensable at or below 100 °C.

According to one further aspect of the invention, the nonpolar stripping agent comprises at least one component from the group comprising Nitrogen, Helium and Hydrogen.

According to one further aspect of the invention, the nonpolar stripping agent comprises an aliphatic, an alicyclic or an aromatic hydrocarbon, preferably a C₅ or C₆ aliphatic, alicyclic or aromatic hydrocarbon.

Aliphatic, alicyclic and aromatic hydrocarbons have a particularly low electric dipole moment, since no polar functional groups such as Hydroxyl-, Amino- or Carboxyl groups are present.

According to one further aspect of the invention, the nonpolar stripping agent comprises at least one component from the group comprising Pentane, Hexane, Cyclopentane, and Cyclohexane.

Further preferred, the nonpolar stripping agent comprises hexane, further preferred the nonpolar stripping agent consists of hexane.

The mentioned compounds have boiling temperatures which allow them to be easily converted into a gaseous state under the operation conditions of the partial regeneration column. At the same time, these compounds have a low enthalpy of vaporization, which reduces energy consumption of the process.

According to one further aspect of the invention, the scrubbing agent comprises an aqueous solution of at least one amine, wherein the at least one amine is the absorbent compound.

According to one further aspect of the invention, the first carbon dioxide containing regeneration stream containing carbon dioxide, gaseous nonpolar stripping agent and water is discharged from the partial regeneration column, and wherein said stream is cooled and subsequently introduced into a first phase separation apparatus, wherein a first condensed mixture containing water and liquid nonpolar stripping agent and a first gaseous stream containing carbon dioxide is obtained, and wherein the first gaseous stream containing carbon dioxide is separated from said first condensed mixture and is discharged from the first phase separation apparatus.

According to this embodiment, the first carbon dioxide containing regeneration stream comprises carbon dioxide, gaseous nonpolar stripping agent and water. This mixture is discharged from the partial regeneration column. The first phase separation apparatus is preferably a gas-liquid-liquid separator. The first condensed mixture particularly comprises two non-miscible liquid phases, a water phase and a phase of condensed nonpolar stripping agent. According to one preferred embodiment, the condensed nonpolar stripping agent comprises hexane. A first condensed stream containing carbon dioxide is separated in the first phase separation apparatus, in particular in the gas-liquid-liquid separator, as a gaseous phase, and subsequently discharged.

The first condensed mixture is preferably condensed at a temperature of condensation from 0 °C to 95 °C, preferably at a temperature of condensation from 15 °C to 55 °C, more preferred at a temperature of condensation from 15 °C to 35 °C.

According to one further aspect of the invention, a first water rich stream and a first stream rich in gaseous nonpolar stripping agent is recovered from the first condensed mixture containing water and liquid nonpolar stripping agent, wherein the first stream of gaseous nonpolar stripping agent is obtained by
- separating the liquid nonpolar stripping agent from water by means of phase separation in the first phase separation apparatus, and subsequently vaporizing the nonpolar stripping agent by means of indirect heat exchange; or
- directly vaporizing the nonpolar stripping agent from the mixture containing water and the liquid nonpolar stripping agent in the first phase separation apparatus, whereby water remains in the liquid state,
and wherein the first stream rich in gaseous nonpolar stripping agent is subsequently introduced into the partial regeneration column for contacting the carbon dioxide enriched scrubbing agent stream.

The first water rich stream separated from the nonpolar scrubbing agent may be returned to the partial regeneration column, where the water forms part of the scrubbing agent.

According to the first alternative of the aforementioned embodiment, the liquid nonpolar stripping agent is first separated from water by means of the first phase separation apparatus. Afterwards, the essentially pure liquid nonpolar scrubbing agent is vaporized by means of indirect heat exchange, for example in a heat exchanging apparatus such as a shell-and-tube heat exchanger.

According to the second alternative of the aforementioned embodiment, the nonpolar stripping agent is directly vaporized from the mixture containing said stripping agent and water. No separation of the two liquid phases is carried out. This alternative is in particular suitable in case the boiling temperature of the non-polar scrubbing agent is significantly lower than the boiling temperature of water under the prevailing conditions.

According to one further aspect of the invention, a make-up stream of gaseous nonpolar stripping agent is added to the first stream rich in gaseous nonpolar stripping agent, to obtain a combined stream of gaseous nonpolar stripping agent, and introducing said combined stream into the partial regeneration column for contacting the carbon dioxide enriched scrubbing agent stream.

Thereby, for example evaporation losses on the non-polar scrubbing agent are compensated.

According to one further aspect of the invention, the first gaseous stream containing carbon dioxide is compressed, cooled and subsequently introduced into a second phase separation apparatus, wherein a second condensed mixture containing water and liquid nonpolar stripping agent and a second gaseous stream containing carbon dioxide is obtained, and wherein the second gaseous stream containing carbon dioxide is separated from the second condensed mixture containing water and liquid nonpolar stripping agent and is discharged from the second phase separation apparatus.

The additional purification steps of cooling, compressing and additional phase separation increase the purity of the respective carbon dioxide stream. Hence, this sequence of process steps produces a carbon dioxide product stream that is sufficiently pure for subsequent use or sequestration. Furthermore, the thus implied reuse of the nonpolar stripping agent, in particular condensable nonpolar stripping agent, reduces the required make-up stream of the nonpolar stripping agent.

The first gaseous stream containing carbon dioxide is preferably compressed at a pressure from 2 bara to 50 bara, preferably at a pressure from 10 bara to 30 bara.

The second condensed mixture is preferably condensed at a temperature of condensation from 0 °C to 95 °C, preferably at a temperature of condensation from 15 °C to 55 °C, more preferred at a temperature of condensation from 15 °C to 35 °C.

According to one further aspect of the invention, a second water rich stream and a second stream rich in gaseous nonpolar stripping agent is recovered from the second condensed mixture containing water and liquid nonpolar stripping agent, wherein the second stream of gaseous nonpolar stripping agent is obtained by
- separating the liquid nonpolar stripping agent from water by means of phase separation in the second phase separation apparatus, and subsequently vaporizing the nonpolar stripping agent by means of indirect heat exchange; or
- directly vaporizing the nonpolar stripping agent from the mixture containing water and the liquid nonpolar stripping agent in the second phase separation apparatus, whereby water remains in the liquid state,
and wherein the second stream rich in gaseous nonpolar stripping agent is subsequently introduced into the partial regeneration column for contacting the carbon dioxide enriched scrubbing agent stream.

The second water rich stream separated from the nonpolar scrubbing agent may be returned to the partial regeneration column, where the water forms part of the scrubbing agent.

According to the first alternative of the aforementioned embodiment, the liquid nonpolar stripping agent is first separated from water by means of the first phase separation apparatus. Afterwards, the essentially pure liquid nonpolar scrubbing agent is vaporized by means of indirect heat exchange, for example in a heat exchanging apparatus such as a shell-and-tube heat exchanger.

According to the second alternative of the aforementioned embodiment, the nonpolar stripping agent is directly vaporized from the mixture containing said stripping agent and water. No separation of the two liquid phases is carried out. This alternative is in particular suitable in case the boiling temperature of the non-polar scrubbing agent is significantly lower than the boiling temperature of water under the prevailing conditions.

According to one further aspect of the invention, the partially regenerated scrubbing agent stream is generated in such a way that the ratio of the carbon dioxide loading of the partially regenerated scrubbing agent stream to the carbon dioxide loading of the carbon dioxide enriched scrubbing agent stream is 0.9 or less, preferably is from 0.6 to 0.9.

The carbon dioxide enriched scrubbing agent stream is preferably partially regenerated in the partial regeneration column at a temperature equal to or below 100 °C. This is done in such a way that the ratio between the carbon dioxide loading of the partially regenerated scrubbing agent stream and the carbon dioxide loading of the carbon dioxide enriched scrubbing agent stream is preferably from 0.6 to 0.9. This carbon dioxide loading ratio is also referred to as the λ value.

Correspondingly, the regenerated scrubbing agent stream is generated in such a way that the ratio of the carbon dioxide loading of the regenerated scrubbing agent stream to the carbon dioxide loading of the carbon dioxide enriched scrubbing agent stream is preferably less than 0.6, in particular less than 0.3, more preferred less than 0.1.

According to one further aspect of the invention, a carbon dioxide loading of the partially regenerated scrubbing agent stream is 0.05 mol to 0.95 mol carbon dioxide per mol of the absorbent compound, in particular 0.05 mol to 0.95 mol carbon dioxide per mol amine, preferably 0.25 mol to 0.40 mol carbon dioxide per mol of the absorbent compound, in particular 0.25 mol to 0.40 mol carbon dioxide per mol amine.

Correspondingly, a carbon dioxide loading of the regenerated scrubbing agent stream is preferably less than 0.25 mol carbon dioxide per mol of the absorbent compound, in particular less than 0.25 mol carbon dioxide per mol amine, preferably less than 0.05 mol carbon dioxide per mol of the absorbent compound, in particular less than 0.05 mol carbon dioxide per mol amine.

According to one further aspect of the invention, the carbon dioxide loading of the partially regenerated scrubbing agent is 0.38 mol or less carbon dioxide per mol of the absorbent compound, in particular 0.38 mol or less carbon dioxide per mol of amine, preferably is 0.36 mol or less carbon dioxide per mol of the absorbent compound, in particular 0.36 mol or less carbon dioxide per mol of amine, more preferred is 0.35 mol or less carbon dioxide per mol of the absorbent compound, in particular 0.35 mol or less carbon dioxide per mol of amine.

A loading of 0.38 mol carbon dioxide per mol absorbent compound decreases efficiently the specific reboiler duty (SRD) of the hot regeneration column in comparison to a case in which no partial regeneration column is used, but requires a low amount of nonpolar scrubbing agent. A loading of 0.36 mol carbon dioxide per mol absorbent compound further decreases significantly the specific reboiler duty (SRD) of the hot regeneration column, but still requires a low amount of nonpolar scrubbing agent. A loading of 0.35 mol carbon dioxide per mol absorbent compound further decreases significantly the specific reboiler duty (SRD) of the hot regeneration column.

Hence, according to one further aspect of the invention, the carbon dioxide loading of the partially regenerated scrubbing agent is 0.33 to 0.39 mol carbon dioxide per mol of nonpolar absorbent compound, in particular 0.33 to 0.39 mol carbon dioxide per mol of amine, preferably is 0.34 to 0.38 mol carbon dioxide per mol of nonpolar absorbent compound, in particular 0.34 to 0.38 mol carbon dioxide per mol of amine, more preferred is 0.35 to 0.36 mol carbon dioxide per mol of nonpolar absorbent compound, in particular 0.35 to 0.36 mol carbon dioxide per mol of amine.

In this context, the term "mol amine" may also be defined as "mol amine group", in particular in case the "amine" contains more than one amine group.

According to one further aspect of the invention, the partial regeneration column is operated in such a way so that a stream containing carbon dioxide, gaseous nonpolar stripping agent and water discharged from the partial regeneration column has a temperature of 0 °C to 95 °C.

According to one further aspect of the invention, the ratio of the first substream to the sum of the first and second substream is from 0.45 to 0.90.

The ratio of the partially regenerated scrubbing agent stream rerouted to the absorption column (first substream) and the total stream generated in the partial regeneration column (sum of first and second substream) is defined as the split fraction ξ. The preferred operating range corresponds to a value of ξ which is 0.45 or higher, up to ξ = 0.90.

According to one further aspect of the invention, the absorption column comprises a first absorption zone and a second absorption zone, wherein the flue gas stream is first introduced into the first absorption zone, and is contacted in the first absorption zone with the first scrubbing agent stream and the second scrubbing agent stream introduced into the second absorption zone, and wherein the flue gas stream subsequently is introduced into the second absorption zone, and is contacted in the second absorption zone with the second scrubbing agent stream.

According to this embodiment, the first scrubbing agent stream is introduced into the first absorption zone, preferably is introduced at the top of the first absorption zone. Furthermore, the second scrubbing agent stream is introduced into the second absorption zone, preferably is introduced at the top of the second absorption zone.

According to this embodiment, the flue gas stream contacts the first scrubbing agent stream and the second scrubbing agent stream introduced into the second absorption zone in the first absorption zone under first carbon dioxide absorption conditions. A first carbon dioxide depleted flue gas stream is then discharged from the first absorption zone and enters the second absorption zone. Said first carbon dioxide depleted flue gas stream then contacts the second scrubbing agent stream in the second absorption zone under second carbon dioxide absorption conditions. A second carbon dioxide depleted flue gas stream is then discharged from the second absorption zone. This second carbon dioxide depleted flue gas stream forms the carbon dioxide depleted flue gas stream, which is discharged from the absorption column.

The second scrubbing agent stream is discharged from the second absorption zone as a second carbon dioxide enriched scrubbing agent stream. Said stream then enters the first absorption zone, where it is mixed with the first scrubbing agent stream. In the first absorption zone, this mixed stream absorbs further carbon dioxide and thus forms the carbon dioxide enriched scrubbing agent stream, which is discharged from the absorption column.

The first and the second absorption zone may each be provided with surface enlarging internals such as trays, structured packing or random packing.

According to one further aspect of the invention, a stream containing carbon dioxide and water vapour is discharged from the hot regeneration column, and wherein at least a part of the stream containing carbon dioxide and water vapour is introduced into the partial regeneration column as an additional stripping agent.

This reduces the energy consumption of the process. The water vapour introduced into the partial regeneration column can easily be condensed and separated from the nonpolar stripping agent downstream.

According to one further aspect of the invention, the second carbon dioxide containing regeneration stream containing carbon dioxide and water vapour is discharged from the hot regeneration column, and wherein said stream is cooled and subsequently introduced into a third phase separation apparatus, wherein condensed water and a third gaseous stream containing carbon dioxide is obtained, wherein the third gaseous stream containing carbon dioxide is separated from said condensed water and is discharged from the third phase separation apparatus, and wherein the condensed water is returned to the hot regeneration column.

The condensed water is preferably obtained at a temperature of 0 °C to 95 °C, preferably at a temperature of 15 °C to 55 °C, more preferred at 15 °C to 35 °C.

According to one further aspect of the invention, the third gaseous stream containing carbon dioxide is compressed, subsequently cooled and subsequently introduced into a fourth phase separation apparatus, wherein condensed water and a fourth gaseous stream containing carbon dioxide is obtained, wherein the fourth gaseous stream containing carbon dioxide is separated from said condensed water and is discharged from the fourth phase separation apparatus.

In the fourth phase separation apparatus, the condensed phase may also contain condensed nonpolar stripping agent, which was carried from the partial regeneration column to the hot regeneration column. This condensed nonpolar stripping agent may be separated from the aqueous phase and recycled to the partial regeneration column as well.

The additional purification steps of cooling, compressing and additional phase separation increase the purity of the respective carbon dioxide stream. Hence, this sequence of process steps produces a carbon dioxide product stream that is sufficiently pure for subsequent use or sequestration. Furthermore, the aforementioned reuse of the nonpolar stripping agent, which is also found in the head stream of the hot regeneration column, in particular condensable nonpolar stripping agent, reduces the required make-up stream of the nonpolar stripping agent.

The third gaseous stream containing carbon dioxide is preferably compressed at a pressure of 2 bara to 50 bara, preferably at a pressure of 10 bara and 30 bara.

According to one further aspect of the invention, the third gaseous stream containing carbon dioxide discharged from the third separation apparatus is compressed together with the first gaseous stream containing carbon dioxide to form a combined gaseous stream containing carbon dioxide, and wherein said combined stream is subsequently cooled and introduced into the second phase separation apparatus, wherein a third condensed mixture containing water and liquid nonpolar stripping agent and a fifth gaseous stream containing carbon dioxide is obtained, and wherein the fifth gaseous stream containing carbon dioxide is separated from the third condensed mixture containing water and liquid nonpolar stripping agent and is discharged from the second phase separation apparatus.

It was found that using a single compressor instead of two dedicated compressors for the gaseous streams discharged from the first and third phase separation apparatuses does not impact the final purity of the carbon dioxide product. Moreover, residual nonpolar stripping agent withdrawn from the hot regeneration column is vaporized again with the nonpolar stripping agent withdrawn from the partial regeneration column, without the requirement of an additional return line from the fourth phase separation apparatus. Thus, losses in non-polar stripping agent and expenditures on additional equipment (only one compressor, no return line from fourth phase separation apparatus) are reduced. The flow of the required make-up stream of the non-polar stripping agent is reduced accordingly.

According to one further aspect of the invention, in the partial regeneration column the carbon dioxide enriched scrubbing agent stream is additionally contacted with a solid acidic regeneration catalyst having Lewis or Bronsted acidic centers.

The non-polar stripping agent impacts the transfer limitations by decreasing the partial pressure of CO₂ in the gas phase to improve the overall kinetic of desorption. However, alone, this process will be limited by the kinetic of the chemical reactions because it has no impact on it. On the other side, the acidic solid catalyst impacts the kinetic of chemical reactions but does not change the limitations related to the partial pressure of CO₂ in the gas phase. The combination of both of the process will have a synergetic effect because, each process solves what is limiting the other one.

Preferably, the solid acidic regeneration catalyst comprises at least one member selected from the following group:
Metal oxides, such as Al₂O₃, TiO₂, Cr₂O₃, V₂O₅, WOs, MgO, MoOs, MnO₂, Fe₂O₃, NiO, CuO, ZrO₂, Nb₂O₅, Ag₂CO₃, Ag₂O, SnO₂;
metal oxyhydroxides such as TiO(OH)₂, AlO(OH); synthetic and natural zeolites, such as HZSM-5, H-Beta zeolites, silico-alumino-phosphate SAPO-34;
mesoporous silica, such as MCM-41 and SBA-15;
sulfated metal oxides, such as SO₄⁻²/TiO₂ , SO₄⁻²/ZrO₂ and Ce(SO₄)₂/ZrO₂;
sulfated-metal modified catalysts, such as Fe promoted SO₄²⁻/ZrO₂/MCM-41;
hybrid composite and metal modified materials.

The term scrubbing agent, synonymous with absorption medium or solvent, is in the context of the present invention to be understood as meaning substances or substance mixtures which under process conditions are in the form of a liquid, have an absorption capacity for the components to be separated from the flue gas and may be regenerated by physical methods, for example by flashing, stripping or by hot regeneration.

Chemical washes, like amine washes, which are known per se and frequently used for the absorption of acid gases such as carbon dioxide, are based on chemical absorption (chemisorption). Chemical absorption takes advantage of the chemical reaction between absorbed substance (e.g. acid gas such as CO₂) and the solvent active component (e.g. amine) to form a rich liquid, which is regenerated by means of heat to break the chemical bonds formed in the absorption step. Chemical absorption is therefore well suited to achieve high capture rates and purities even at relatively low feed pressures as opposed to physical solvents.

In amine washing, in particular slightly alkaline aqueous solutions of amines are used in an absorption unit (absorption section) usually designed as a washing column. Absorption may take place at low temperature, e.g., 40 °C. Fresh or regenerated absorbent may be fed at the top of the column and the gas stream to be separated may be introduced in the lower section of the scrubbing column. In this process, carbon dioxide is reversibly chemically absorbed. The gas, which is depleted in carbon dioxide, may leave the column at the top and the loaded scrubbing agent may be discharged at the bottom of the column and may further be fed into a desorption or regeneration section, e.g. a column. In this column, the reaction reverses the chemical equilibrium at a higher temperature, thus releasing the absorbed carbon dioxide as a gas. It may then be discharged at the head of the regeneration column for further use or sequestration. The absorbent regenerated in this way may be returned to the absorption section.

The scrubbing agent contains at least one absorbent compound which chemisorptively binds carbon dioxide. The at least one absorbent compound may be selected from the group comprising:
- Amines, for example
   primary amines, for example monoethanolamine (MEA), aminomethylpropanol (AMP),
   secondary amines, for example ethylenediamine (EDA), piperazine (PZ), butylethanolamine (BEA), diethanolamine (DEA),
   tertiary amines, for example methyldiethanolamine (MDEA), 3-Dimetyl-1-Aminomethypropanol (3DMA1P), triethylendiamine (TEDA), diethylamino-2-butanol (DEAB), 3-(Diethylamino)propylamine (DEAPA);
- an inorganic basic solution, preferably a solution of at least one compound, most preferably an aqueous solutions of at least one compound, selected from the group comprising
   ammonia, sodium hydroxide, potassium hydroxide, potassium carbonate.

The absorbent compound may form the scrubbing solution together with an inorganic solvent such as water or organic solvent such as methanol.

Absorption apparatuses are often arranged in the form of absorption columns. An absorption column, alternatively referred to for example as a gas scrubber or scrubbing column, is a process engineering apparatus in which a gas stream is intensively contacted with a liquid stream to achieve uptake of constituents of the gas stream in the liquid. The configuration thereof aims to generate the largest possible liquid surface area for the best possible mass transfer between the gas and liquid phase. This may be effected by generating bubbles or droplets or by trickling onto solid surfaces. It is therefore usual to provide surface area-enlarging internals such as trays, for example sieve trays or bubble-cap trays, or structured packing; alternatively sections of the absorption column may be filled with random packing such as for example spheres, cylinders, rings or saddles. In terms of construction, absorption columns are usually configured as upright pipes, optionally by combination of pipe sections, which extend along a longitudinal axis running parallel to the vertical and which encompass an interior of the absorption column. Different absorption zones may be comprised in an absorption apparatus and are often but not necessarily separated from one another in terms of construction. The different absorption zones may be fed with different scrubbing agents.

A hot regeneration apparatus, in particular a hot regeneration column, may be understood as meaning a process engineering apparatus which is similar to an absorption column in terms of construction but whose purpose is that of very largely freeing absorbent/scrubbing agent laden with gas components of said components and thus regenerating the scrubbing agent by desorption through introduction of heat. This is technically achieved for example by providing the hot regeneration column with a reboiler for heating the column sump, thus producing scrubbing agent intrinsic vapour which serves as an expulsion, desorption and stripping medium and thus promotes desorption of the gas components.

The invention will now be detailed by way of exemplary embodiments and examples with reference to the attached drawings. In the figures and the accompanying description, equivalent elements are each provided with the same reference marks.

In the drawings
- Figure 1: depicts a flow diagram of a first embodiment of the process according to the invention,
- Figure 2: depicts a flow diagram of a second embodiment of the process according to the invention, and
- Figure 3: depicts a flow diagram of a third embodiment of the process according to the invention.

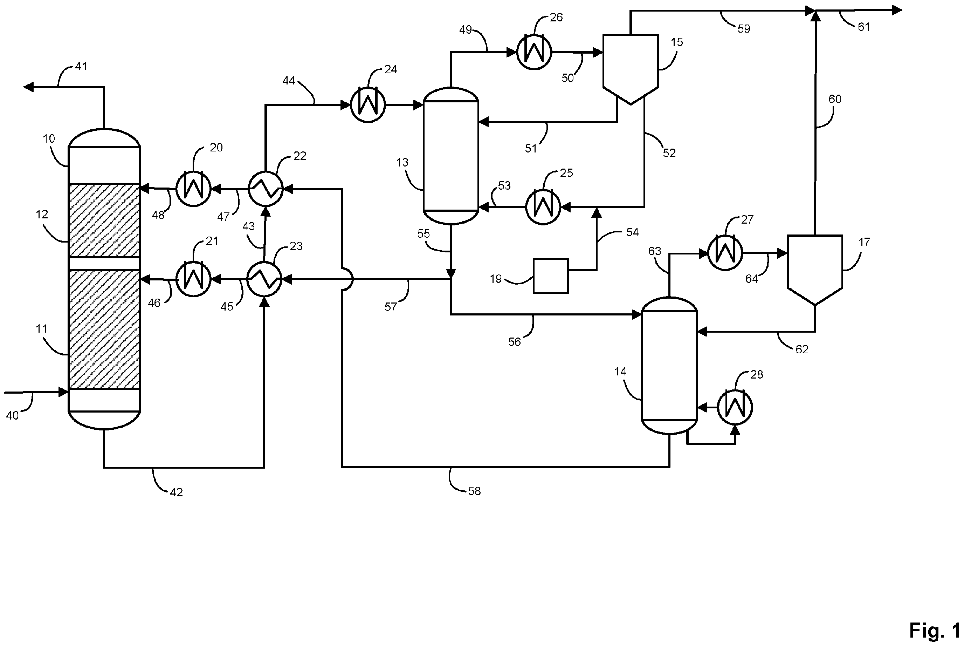

In the schematic representation of the process according to the invention as shown in Figure 1, a particular embodiment of the invention is shown in which hexane is used as the non-polar stripping agent and an aqueous amine solution is used as the liquid scrubbing agent to absorb carbon dioxide from a flue gas stream.

In the process shown in Figure 1, a carbon dioxide containing flue gas stream is fed via line 40 and is introduced into the bottom region of an absorption column 10. The absorption column 10 comprises a first absorption zone 11 and a second absorption zone 12. A partially regenerated scrubbing agent stream is introduced into the absorption column 10 via line 46 at the top of the first absorption zone 11. Within the first absorption zone 11, carbon dioxide contained in the flue gas stream is absorbed via chemical absorption (chemisorption) by means of the amine contained in the partially regenerated aqueous amine solution (partially regenerated scrubbing agent). The flue gas stream depleted in carbon dioxide then enters the second absorption zone 12, into which a hot regenerated scrubbing agent stream is introduced via line 48. In the second absorption zone 12, the flue gas is further depleted in carbon dioxide so that as a result, an essentially carbon dioxide free flue gas stream is discharged from the second absorption zone and the absorption column 10 via line 41.

The regenerated scrubbing agent stream introduced into the second absorption zone 12 via line 48 absorbs carbon dioxide from the flue gas stream in said second absorption zone 12 and then enters the first absorption zone 11, where it mixes with the partially regenerated scrubbing agent stream introduced via line 46. The resulting mixed scrubbing agent stream absorbs further carbon dioxide in the first absorption zone, from which a carbon dioxide enriched scrubbing agent stream results. This stream is discharged from the absorption column 10 via line 42.

The carbon dioxide enriched scrubbing agent stream is preheated in heat exchanger 23 against the partially regenerated scrubbing agent stream fed via line 57. It is then further fed via line 43 into heat exchanger 22, in which it is further heated by means of the hot regenerated scrubbing agent stream fed via line 58. The further heated carbon dioxide enriched scrubbing agent stream is then fed via line 44 into heat exchanger 24, where it is further heated. The further heated carbon dioxide enriched scrubbing agent stream is then introduced into a partial regeneration column 13 at its top region. To the partial regeneration column 13, a gaseous hexane stream, which forms the gaseous nonpolar stripping agent stream according to the invention, is introduced. The carbon dioxide absorbed in the scrubbing agent is partially stripped by means of the gaseous hexane, which is contacting the carbon dioxide enriched scrubbing agent in countercurrent flow within the partial regeneration column 13. By stripping with gaseous hexane in the partial regeneration column 13, the carbon dioxide enriched scrubbing agent stream is partially regenerated, so that a partially regenerated scrubbing agent stream results, which is discharged from the partial regeneration column 13 in its bottom region via line 55.

The stream fed via line 55 is divided into a first substream fed via line 57, and a second substream fed via line 56. The share of the first substream in line 57 of the total stream of partially regenerated scrubbing agent fed via line 55 is 80 %. Correspondingly, the share of the second substream in line 56 of the total stream fed via line 55 is 20 %.

The first substream of partially regenerated scrubbing agent is precooled in heat exchanger 23 against carbon dioxide enriched scrubbing agent, further fed via line 45, and further cooled in heat exchanger 21. The further cooled partially regenerated scrubbing agent partial stream then enters the first absorption zone 11 of the absorption column 10 as the first scrubbing agent stream according to the invention.

From the top of the partial regeneration column 13, a first carbon dioxide containing regeneration stream is discharged via line 49. Said first carbon dioxide containing regeneration stream comprises at least carbon dioxide, hexane and water vapour. Said stream is cooled in heat exchanger 26 and further fed via line 50. It is then introduced into a first phase separation apparatus 15. In the first phase separation apparatus 15, a condensed mixture containing water and liquid hexane and a gaseous carbon dioxide stream is formed. In the first phase separation apparatus 15, the gaseous carbon dioxide is thus separated from said condensed mixture. It is discharged from the first phase separation apparatus 15 via line 59.

Furthermore, in the phase separation apparatus 15, the condensed liquid phase separates into an aqueous water phase and an organic hexane phase. The phase separation apparatus 15 is therefore also referred to as gas-liquid-liquid separator. The aqueous condensed phase containing water is returned to the partial regeneration column 13 via line 51. The organic condensed phase containing hexane is first fed via line 52 to heat exchanger 25, where it is vaporized again to afford gaseous hexane. Hexane make-up is fed from a storage tank 19 via line 54 to line 52. The vaporized hexane is further fed via line 53 and then is introduced into the partial regeneration column 13 in its bottom region.

Water losses might be compensated by means of a further storage tank (not shown), which supplies the process with make-up water.

As an alternative to using a gas-liquid-liquid separator for separation of water and hexane into two liquid streams, the hexane can also be directly vaporized from the condensed mixture of water and hexane. In this case, the combined liquid phase obtained in the first phase separation apparatus containing water and hexane is fed via line 52 to heat exchanger 25, in which the hexane is vaporized. The heat exchanger then forms part of the phase separation apparatus according to the invention.

The second substream of partially regenerated scrubbing agent which is fed via line 56 is introduced into a hot regeneration column 14 in its top region. The hot regeneration column 14 comprises a heat exchanger 28 configured as reboiler, for reboiling a bottom stream of the partially regenerated scrubbing agent. By means of reboiling said bottom stream, water vapour is generated in the aqueous solution of the amine scrubbing agent, by which the carbon dioxide desorbs from the absorbent compound. The desorption of carbon dioxide in the hot regeneration column 14 is therefore effected by steam. Hence, a regenerated or hot regenerated scrubbing agent stream is discharged from the bottom region of the hot regeneration column 14 via line 58. This regenerated or hot regenerated scrubbing agent stream is further regenerated than the partially regenerated scrubbing agent obtained in the partial regeneration column 13. The regenerated scrubbing agent stream is precooled in heat exchanger 22 against carbon dioxide enriched scrubbing agent fed via line 43. It is then further fed via line 47 into heat exchanger 20, where it is further cooled. The cooled regenerated scrubbing agent forms the second scrubbing agent stream, which is introduced into the second absorption zone 12 of the absorption column 10 via line 48.

From the top region of the hot regeneration column 14, a second carbon dioxide containing regeneration stream is discharged via line 63. Said stream mainly comprises carbon dioxide and water vapour, but may also contain minor amounts of hexane. Said stream is fed to a heat exchanger 27, where it is cooled to condense the water. The resulting stream is fed via line 64 into a gas-liquid separator, which is referred to as the third phase separation apparatus 17 according to the invention. In the third phase separation apparatus 17, mainly condensed water, which also may contain minor amounts of absorbent compound (amine), is collected and returned to the hot regeneration column 14 vial line 62. The gaseous carbon dioxide containing stream also separated in the third phase separation apparatus 17 is discharged from it via line 60 and combined with the carbon dioxide containing stream fed via line 59. The resulting combined stream is discharged from the process via line 61 and further purified to obtain a pure carbon dioxide stream (not shown).

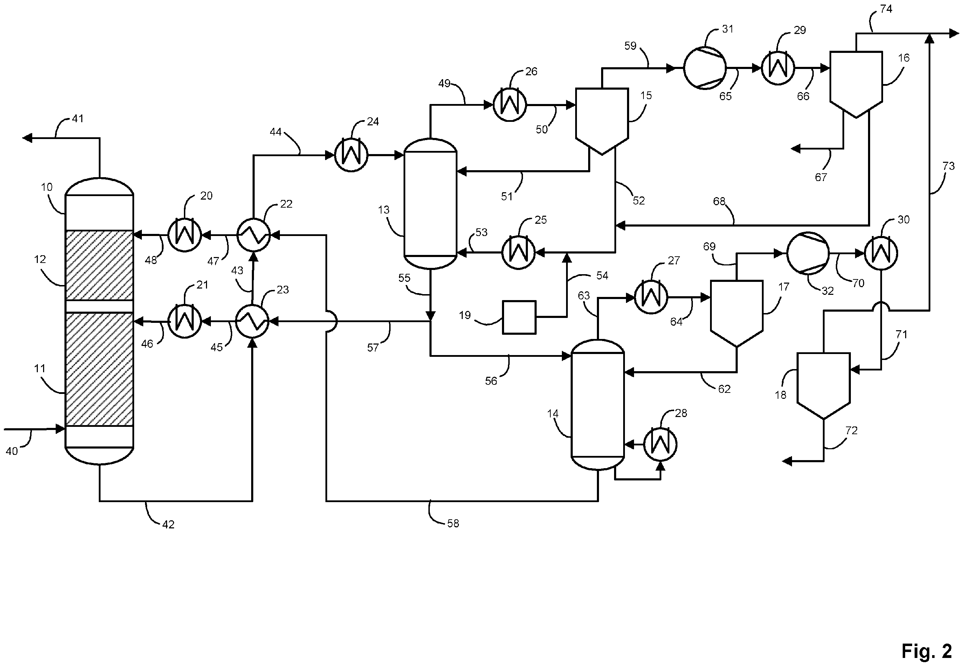

In the schematic representation of the process according to the invention as shown in Figure 2, a particular embodiment of the invention is shown in which again hexane is used as the non-polar stripping agent and an aqueous amine solution is used as the liquid scrubbing agent to absorb carbon dioxide from a flue gas stream. Only aspects not already discussed in connection with Figure 1 are explained in detail in the following.

The carbon dioxide containing stream discharged from the first phase separation apparatus 15 is fed via line 59 to a compressor 31. The compressed carbon dioxide containing stream is further fed via line 65 to a heat exchanger 29, in which the stream is cooled to condense water and hexane. The cooled stream is further fed via line 66 to a second phase separation apparatus, where the condensed water and hexane are separated. The thus further purified carbon dioxide containing stream is discharged from the second phase separation apparatus 16 via line 74. In the second phase separation apparatus, the organic hexane phase of the stripping agent and water are separated by means of phase separation. Water is discharged from the second phase separation apparatus 16 via line 67 and is disposed of after appropriate processing. The condensed hexane is discharged via line 68 and combined with condensed hexane fed via 52. The combined stream fed via line 52 is vaporized in heat exchanger 25 for further use in the partial regeneration column 13.

The carbon dioxide containing stream discharged from the third phase separation apparatus 17 is fed vial line 69 to a compressor 32. The compressed carbon dioxide containing stream is further fed via line 70 to a heat exchanger 30, where it is cooled to mainly condense water from the carbon dioxide containing stream. The cooled stream is further fed via line 71 to a fourth phase separation apparatus 18, in which the water is separated from the carbon dioxide containing stream. The water is discharged from the fourth phase separation apparatus 18 via line 72 and is disposed of after appropriate processing. The purified carbon dioxide containing stream is discharged from the fourth phase separation apparatus 18 via line 73 and is combined with the purified carbon dioxide containing stream fed via line 74. The combined purified carbon dioxide stream is withdrawn from the process and can be sequestered or further used (not shown).

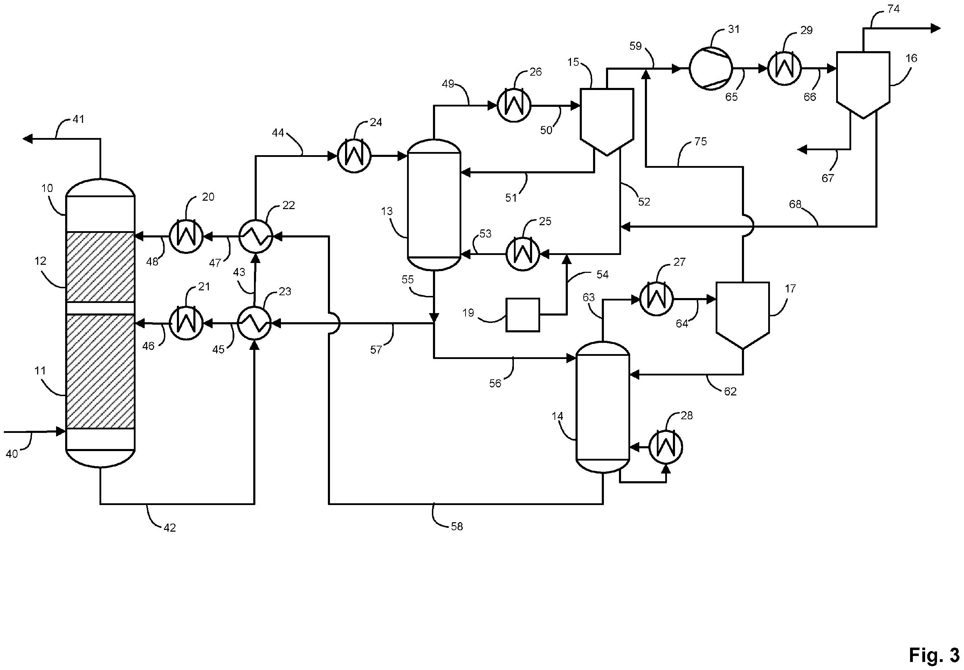

In the schematic representation of the process according to the invention as shown in Figure 3, a particular embodiment of the invention is shown in which again hexane is used as the non-polar stripping agent and an aqueous amine solution is used as the liquid scrubbing agent to absorb carbon dioxide from a flue gas stream. Only aspects not already discussed in connection with Figure 1 or 3 are explained in detail in the following.

The carbon dioxide containing stream discharged from the third phase separation apparatus 17 via line 75 is not sent to a dedicated compressing, cooling and separation unit as shown in Figure 2, but combined with the carbon dioxide containing stream discharged via line 59 from the first phase separation apparatus 15. The combined carbon dioxide stream is then treated as described for the stream of line 59 in the process of Figure 2.

The prior art process (process without partial regeneration and nonpolar stripping agent) and the process according to the invention were both simulated in Aspen Plus V12.1. Simulation results are discussed in the following.

### Example 1:

The following table 2 gives the performance of a scrubbing agent loop with partially regenerated scrubbing agent using a 30 wt.-% aqueous solution of monoethanolamine (MEA) as the scrubbing agent. The system targets the removal of 90 % of an acid gas, such as carbon dioxide, from a flue gas stream having the following composition according to table 1.

**Table 1 - flue gas conditions**

| Flue gas conditions | |
|---|---|
| Wet flow rate, Nm³/h | 60,391 |

| Composition, wet mol-% | |
|---|---|
| Carbon dioxide (CO₂) | 3.6 |
| Oxygen (O₂) | 14.6 |
| Nitrogen (N₂) | 78.1 |
| Water (H₂O) | 3.7 |

The partial regenerated scrubbing agent loop set up comprises an absorption column where the flue gas enters saturated at 30 °C and atmospheric pressure (1.11 bara). The carbon dioxide enriched scrubbing agent stream (also rich solvent) is led to a partial regeneration column for the partial regeneration, after heating to 95 °C. The stream exiting the partial regeneration column is the partially regenerated scrubbing agent stream (also semi-lean solvent). The scrubbing agent stream exiting the partial regeneration column is split into two streams as described for the Figures. Hence, 80 % of the semi-lean solvent is returned to the absorption column at a chosen intermediary height, and 20 % is further regenerated in a hot regeneration column by means of steam as the hot regeneration agent. Inside the hot regeneration column, the scrubbing agent is regenerated at a temperature of 130 °C and a pressure of 1.9 bara. The resulting regenerated scrubbing agent (also lean solvent) is regenerated further than the partially regenerated scrubbing agent.

**Table 2 - performance data**

| | | |
|---|---|---|
| **Lean solvent loading** | 0.20 | mol CO₂/mol amine |
| **Rich solvent loading** | 0.43 | mol CO₂/mol amine |
| **Semi-lean solvent loading** | 0.35 | mol CO₂/mol amine |
| **Specific reboiler (heat exchanger 28) duty** | 1.76 | MJ/kg CO₂ |
| **Flow rate of rich solvent at the absorption column outlet** | 6400 | kmol/h |

### Example 2:

In example 2, according to the setup of Figure 1, the partial regeneration column is a stripper column fed by an inert organic gas at 95 °C and atmospheric pressure. In particular, the stripping gas is hexane entering inside the column at 95 °C. The system targets to reduce the loading of the rich solvent (carbon dioxide enriched stripping agent) to 0.35 (see table 2) fixing the organic gas flow rate to create the semi-lean loading of the solvent. Therefore, the gas flow of hexane is fixed at 150 kmol/h for this example and the following examples 3 and 4. The gas discharged from the partial regeneration column is cooled down to 15 °C before being separated in the gas-liquid-liquid separator. The liquid water phase is sent back to the top of the partial regeneration column and the liquid organic phase is vaporized to be used as the stripping gas at the bottom of the partial regeneration column. To compensate the loss of hexane dissolved in the semi-lean solvent and in the final carbon dioxide stream, a make-up of hexane is added, which flow rate is given in table 3.

**Table 3 - Gas compositions according to the setup of Figure 1**

| **Make-up of hexane** | 11.7 | kmol/h | |
|---|---|---|---|
| **Gas composition, wet mol-%** | CO₂ | H₂O | Hexane |
| **Top partial regeneration column** | 84.8 % | 1.7 % | 13.1 % |
| **Top hot regeneration column** | 89.0% | 0.9 % | 10.1 % |

The partial regeneration column, also referred to as organic stripper, removes enough carbon dioxide from the scrubbing agent to create the semi-lean solvent loop. However, the purity of the carbon dioxide is lower at the top of the partial regeneration column than at the top of the hot regeneration column. This is due to the higher hexane concentration. Therefore, additional purification steps can be considered, as described for Figures 2 and 3 and according to the following examples.

### Example 3:

In example 3, according to the setup of Figure 2, the carbon dioxide containing gas is compressed after the first condensation of the gas phase at the top of both of the stripping columns. After compression, the carbon dioxide containing gas is cooled down at 15 °C before entering inside the respective gas-liquid separators. Downstream the respective compressing and cooling steps, the liquid water phase is removed from the system and the liquid organic phase is vaporized again to be used as a stripping gas in the partial regeneration column.

**Table 4 - Gas compositions downstream compression and cooling according to the setup of Figure 2**

| **Make-up of hexane** | 10.7 | kmol/h | |
|---|---|---|---|
| **Gas composition, wet mol-%** | CO₂ | H₂O | Hexane |
| **Top partial regeneration column** | 97.7 % | 0.2 % | 1.7 % |
| **Top hot regeneration column** | 98.1 % | 0.2 % | 1.7 % |

The additional purification step is increasing the purity of carbon dioxide up to 98 % as indicated in table 4 and the reuse of the hexane condensed reduces the make-up.

### Example 4:

In example 4, according to the setup of Figure 3, the gas streams leaving both strippers are mixed before being compressed together at 12 bara. The mixing allows the use of a single compressor.

**Table 5 - Gas compositions downstream compression and cooling according to the setup of Figure 3**

| **Make-up of hexane** | 10.4 | kmol/h | |
|---|---|---|---|
| **Gas composition, wet mol-%** | CO₂ | H₂O | Hexane |
| **Final product** | 97.8 % | 0.2 % | 1.7 % |

Using a single compressor does not impact the final purity of the carbon dioxide product as it is shown in table 5. Moreover, the hexane coming from the hot regeneration column is vaporized again with the hexane coming from the partial regeneration column. Thus, hexane losses are reduced, and thus also the flow of hexane make-up.

### Comparative example 1:

In the following table 6, the carbon dioxide loading of the semi-lean solvent and the sprecific reboiler duty (SRD) are shown as a function of the flow of hexane going through the partial regeneration column. The SRD is the energy consumption of the reboiler required for the hot regenerations column per ton of carbon dioxide (cf. heat exchanger 28 in the Figures). The results with a flow of hexane are obtained from the simulation used in examples 2 to 4 with the same simulation model and the same process configuration. The downstream carbon dioxide purification steps do not impact these values. The result without hexane stripping stems from a base case simulation with the same scrubbing agent, in which there is no partial regeneration step, and consequently the semi-lean solvent loop cannot be implemented.

**Table 6 - loading of the semi lean solvent and SRD in function of the Hexane flow**

| | | | | | |
|---|---|---|---|---|---|
| **Hexane flow [kmol/h]** | 0 | 10 | 50 | 150 | 400 |
| **Semi-lean loading [mol CO₂/mol]** | n/a | 0.38 | 0.36 | 0.35 | 0.34 |
| **SRD [GJ/t CO₂]** | 3.68 | 2.27 | 1.90 | 1.76 | 1.76 |

The results show the impact of the semi-lean solvent loop on the SRD required for the hot regeneration column. In particular, it is shown that a loading of 0.35 mol carbon dioxide per mol amine significantly decreases the SRD in comparison to a slightly higher loading of 0.36 mol carbon dioxide per mol amine. Furthermore, a relatively low flow of hexane of 50 kmol/h already decreases the SRD significantly compared to the case using no semi-lean solvent loop or a semi-lean solvent loop with a very low Hexane flow of 10 kmol/h. However, results also show that only a low flow of hexane is required to significantly decrease the SRD compared to the base case not implementing a semi-lean solvent loop at all.

### Comparative example 2:

In the following table 7, the temperature of the condensation step at the top of the partial regeneration column is correlated with the purity of the gas leaving it and the make-up flow rate of hexane. The results are obtained based on example 2 with the same model using the same configuration. The make-up quantities of hexane are relatively high in this example, since a large portion of the hexane is not condensed at low pressure. Further compression and cooling (as for examples 3 and 4) will result in higher recovery of hexane, which consequently results in a lower make-up stream.

**Table 7 - Condensation temperature at the top of the partial regeneration column as a function of carbon dioxide purity and hexane make-up**

| | | | | |
|---|---|---|---|---|
| **Condensation temperature [°C]** | 5 | 15 | 25 | 35 |
| **Carbon dioxide purity [mole fraction]** | 84 % | 84 % | 80 % | 69 % |
| **Hexane make-up stream [kmol/h]** | 11.7 | 11.7 | 14.9 | 25.0 |

### List of reference signs

- 10: absorption column
- 11: first absorption zone
- 12: second absorption zone
- 13: partial regeneration column
- 14: hot regeneration column
- 15: first phase separation apparatus
- 16: second phase separation apparatus
- 17: third phase separation apparatus
- 18: fourth phase separation apparatus
- 19: Liquid stripping agent storage tank
- 20 - 30: heat exchanger
- 31, 32: compressor
- 40 - 75: conduit

## Claims

1. A process for separating carbon dioxide from a flue gas stream by gas scrubbing with a liquid scrubbing agent containing at least one absorbent compound which is selective for carbon dioxide absorption, wherein the process comprises the following process steps:
a) Providing the flue gas stream and introducing the flue gas stream into an absorption column (10);
b) Contacting the flue gas stream in the absorption column (10) with a first scrubbing agent stream and a second scrubbing agent stream in countercurrent flow, whereby a carbon dioxide enriched scrubbing agent stream is formed, and wherein a carbon dioxide depleted flue gas stream is formed, which is discharged from the absorption column (10);
c) Introducing the carbon dioxide enriched scrubbing agent stream into a partial regeneration column (13), and contacting the carbon dioxide enriched scrubbing agent stream in the partial regeneration column (13) by means of a gaseous nonpolar stripping agent in countercurrent flow, to generate a partially regenerated scrubbing agent stream and a first carbon dioxide containing regeneration stream;
d) Dividing the partially regenerated scrubbing agent stream into a first substream and into a second substream, wherein the first substream forms the first scrubbing agent stream;
e) Introducing the first scrubbing agent stream into the absorption column (10) for contacting the flue gas stream according to step b);
f) Introducing the second substream into a hot regeneration column (14), wherein the second substream is further regenerated to generate a regenerated scrubbing agent stream, which forms the second scrubbing agent stream, and to generate a second carbon dioxide containing regeneration stream;
g) Introducing the second scrubbing agent stream into the absorption column (10) for contacting the flue gas stream according to step b).

2. The process according to claim 1, wherein the nonpolar stripping agent has an electric dipole moment which is at least 0.5 Debye less than the electric dipole moment of the absorbent compound of the scrubbing agent.

3. The process according to claim 1 or 2, wherein the electric dipole moment of the nonpolar stripping agent is 0.50 Debye or less, preferably is 0.25 Debye or less, more preferred is 0.10 Debye or less.

4. The process according to one of the preceding claims, wherein the nonpolar stripping agent comprises an aliphatic, an alicyclic or an aromatic hydrocarbon, preferably a C₅ or C₆ aliphatic, alicyclic or aromatic hydrocarbon.

5. The process according to claim 4, wherein the nonpolar stripping agent comprises at least one component from the group comprising Pentane, Hexane, Cyclopentane, and Cyclohexane.

6. Process according to one of the aforementioned claims, wherein the nonpolar stripping agent comprises a condensable compound or comprises a mixture of compounds comprising at least one condensable compound, preferably the nonpolar stripping agent comprises a condensable compound which is condensable at or below 100 °C, or comprises a mixture of compounds comprising at least one condensable compound which is condensable at or below 100 °C.

7. The process according to one of claims 1 to 3, wherein the nonpolar stripping agent comprises at least one component from the group comprising Nitrogen, Helium and Hydrogen.

8. The process according to one of the preceding claims, wherein the scrubbing agent comprises an aqueous solution of at least one amine, wherein the at least one amine is the absorbent compound.

9. The process according to one of the preceding claims, wherein the first carbon dioxide containing regeneration stream containing carbon dioxide, gaseous nonpolar stripping agent and water is discharged from the partial regeneration column, and wherein said stream is cooled and subsequently introduced into a first phase separation apparatus (15), wherein a first condensed mixture containing water and liquid nonpolar stripping agent and a first gaseous stream containing carbon dioxide is obtained, and wherein the first gaseous stream containing carbon dioxide is separated from said first condensed mixture and is discharged from the first phase separation apparatus (15).

10. The process according to claim 9, wherein a first water rich stream and a first stream rich in gaseous nonpolar stripping agent is recovered from the first condensed mixture containing water and liquid nonpolar stripping agent, wherein the first stream of gaseous nonpolar stripping agent is obtained by
- separating the liquid nonpolar stripping agent from water by means of phase separation in the first phase separation apparatus (15), and subsequently vaporizing the nonpolar stripping agent by means of indirect heat exchange; or
- directly vaporizing the nonpolar stripping agent from the mixture containing water and the liquid nonpolar stripping agent in the first phase separation apparatus (15), whereby water remains in the liquid state,
and wherein the first stream rich in gaseous nonpolar stripping agent is subsequently introduced into the partial regeneration column for contacting the carbon dioxide enriched scrubbing agent stream.

11. Process according to claim 10, wherein a make-up stream of gaseous nonpolar stripping agent is added to the first stream rich in gaseous nonpolar stripping agent, to obtain a combined stream of gaseous nonpolar stripping agent, and introducing said combined stream into the partial regeneration column for contacting the carbon dioxide enriched scrubbing agent stream.

12. Process according to one of claims 9 to 11, wherein the first gaseous stream containing carbon dioxide is compressed, cooled and subsequently introduced into a second phase separation apparatus (16), wherein a second condensed mixture containing water and liquid nonpolar stripping agent and a second gaseous stream containing carbon dioxide is obtained, and wherein the second gaseous stream containing carbon dioxide is separated from the second condensed mixture containing water and liquid nonpolar stripping agent and is discharged from the second phase separation apparatus (16).

13. Process according to claim 12, wherein a second water rich stream and a second stream rich in gaseous nonpolar stripping agent is recovered from the second condensed mixture containing water and liquid nonpolar stripping agent, wherein the second stream of gaseous nonpolar stripping agent is obtained by
- separating the liquid nonpolar stripping agent from water by means of phase separation in the second phase separation apparatus (16), and subsequently vaporizing the nonpolar stripping agent by means of indirect heat exchange; or
- directly vaporizing the nonpolar stripping agent from the mixture containing water and the liquid nonpolar stripping agent in the second phase separation apparatus (16), whereby water remains in the liquid state,
and wherein the second stream rich in gaseous nonpolar stripping agent is subsequently introduced into the partial regeneration column for contacting the carbon dioxide enriched scrubbing agent stream.

14. Process according to one of the preceding claims, wherein the partially regenerated scrubbing agent stream is generated in such a way that the ratio of the carbon dioxide loading of the partially regenerated scrubbing agent stream to the carbon dioxide loading of the carbon dioxide enriched scrubbing agent stream is 0.9 or less, preferably is from 0.6 to 0.9.

15. Process according to one of the preceding claims, wherein a carbon dioxide loading of the partially regenerated scrubbing agent stream is 0.05 mol to 0.95 mol carbon dioxide per mol of the absorbent compound, in particular 0.05 mol to 0.95 mol carbon dioxide per mol amine, preferably 0.25 mol to 0.40 mol carbon dioxide per mol of the absorbent compound, in particular 0.25 mol to 0.40 mol carbon dioxide per mol amine.

16. Process according to one of the preceding claims, wherein the carbon dioxide loading of the partially regenerated scrubbing agent is 0.38 mol or less carbon dioxide per mol of the absorbent compound, in particular 0.38 mol or less carbon dioxide per mol of amine, preferably is 0.36 mol or less carbon dioxide per mol of the absorbent compound, in particular 0.36 mol or less carbon dioxide per mol of amine, more preferred is 0.35 mol or less carbon dioxide per mol of the absorbent compound, in particular 0.35 mol or less carbon dioxide per mol of amine.

17. Process according to any one of the preceding claims, wherein the partial regeneration column is operated in such a way so that a stream containing carbon dioxide, gaseous nonpolar stripping agent and water discharged from the partial regeneration column has a temperature of 0 °C to 95 °C.

18. Process according to one of the preceding claims, wherein the ratio of the first substream to the sum of the first and second substream is from 0.45 to 0.90.

19. Process according to one of the preceding claims, wherein the absorption column comprises a first absorption zone and a second absorption zone, wherein the flue gas stream is first introduced into the first absorption zone, and is contacted in the first absorption zone with the first scrubbing agent stream and the second scrubbing agent stream introduced into the second absorption zone, and wherein the flue gas stream subsequently is introduced into the second absorption zone, and is contacted in the second absorption zone with the second scrubbing agent stream.

20. Process according to one of the preceding claims, wherein a stream containing carbon dioxide and water vapour is discharged from the hot regeneration column, and wherein at least a part of the stream containing carbon dioxide and water vapour is introduced into the partial regeneration column as an additional stripping agent.

21. Process according to one of the preceding claims, wherein the second carbon dioxide containing regeneration stream containing carbon dioxide and water vapour is discharged from the hot regeneration column, and wherein said stream is cooled and subsequently introduced into a third phase separation apparatus (17), wherein condensed water and a third gaseous stream containing carbon dioxide is obtained, wherein the third gaseous stream containing carbon dioxide is separated from said condensed water and is discharged from the third phase separation apparatus (17), and wherein the condensed water is returned to the hot regeneration column.

22. Process according to claim 21, wherein the third gaseous stream containing carbon dioxide is compressed, subsequently cooled and subsequently introduced into a fourth phase separation apparatus (18), wherein condensed water and a fourth gaseous stream containing carbon dioxide is obtained, wherein the fourth gaseous stream containing carbon dioxide is separated from said condensed water and is discharged from the fourth phase separation apparatus (18).

23. Process according to claim 21, wherein the third gaseous stream containing carbon dioxide discharged from the third separation apparatus is compressed together with the first gaseous stream containing carbon dioxide to form a combined gaseous stream containing carbon dioxide, and wherein said combined stream is subsequently cooled and introduced into the second phase separation apparatus (16), wherein a third condensed mixture containing water and liquid nonpolar stripping agent and a fifth gaseous stream containing carbon dioxide is obtained, and wherein the fifth gaseous stream containing carbon dioxide is separated from the third condensed mixture containing water and liquid nonpolar stripping agent and is discharged from the second phase separation apparatus (16).

24. Process according to one of the preceding claims, wherein in the partial regeneration column the carbon dioxide enriched scrubbing agent stream is additionally contacted with a solid acidic regeneration catalyst having Lewis or Bronsted acidic centers.
